# EUROPÄISCHE PATENTSCHRIFT

(11) **EP 2 319 289 B1**
(45) Veröffentlichungstag und Bekanntmachung des Hinweises auf die Patenterteilung: **05.06.2013**
(21) Anmeldenummer: 10189415.2
(22) Anmeldetag: 29.10.2010
(51) Int. Cl.: A01D 41/12, A01D 41/127, A01D 69/03

(54) **Antriebsanordnung für eine Haspel und einen Spreuverteiler eines Mähdreschers**
Drive unit for a reel and a chaff spreader of a combine
Agencement d'entraînement pour un rabatteur et un dispositif épandeur de menues pailles d'une moissonneuse-batteuse

(30) Priorität: 07.11.2009 DE 202009015201 U
(43) Veröffentlichungstag der Anmeldung: 11.05.2011
(73) Patentinhaber: John Deere Brasil Ltda, 98920-010 Rio Grande do Sul (BR)
(72) Erfinder: Giotto, Angelo, 98920-000, Horizontina (BR); Rodrigues, Paulo C, 98920-000, Horizontina (BR); Bisson, Aldo, 06712-190, Cotia (BR)
(74) Vertreter: Holst, Sönke

(56) Entgegenhaltungen:
- EP-A1- 1 055 359
- DE-A1- 10 206 541
- DE-C1- 3 544 157
- US-A- 5 797 793

## Beschreibung

Die Erfindung betrifft eine Antriebsanordnung für eine Haspel und einen Spreuverteiler eines Mähdreschers, mit einem ersten Hydromotor zum Antrieb der Haspel und einem zweiten Hydromotor zum Antrieb des Spreuverteilers.

### Stand der Technik

An Mähdreschern werden zu Erntegutaufnahme Schneidwerke angebracht, die mit Messerbalken zum Abschneiden des Emteguts, einer darüber angeordneten, im Betrieb rotierenden Haspel und einer Querfördereinrichtung in Form beispielsweise einer Schnecke oder mehrerer Fördergurte ausgestattet sind. Die Haspel drückt das Erntegut im Betrieb entgegen der Vorwärtsrichtung nach hinten und unten, um das Abschneiden der Pflanzen mit dem Messerbalken zu erleichtern. Neben mechanischen Antrieben sind auch hydraulische Antriebe der Haspel bekannt.

Weiterhin sind viele Mähdrescher mit Spreuverteilerpaaren ausgestattet, die bezüglich der Flussrichtung der Emtegutreste stromab der Reinigungseinrichtung angeordnet ist und zum Verteilen der am Ende des Obersiebs übrig bleibenden Erntegutreste dient, bei denen es sich im Wesentlichen um Spreu, Kaff und größere Strohanteile handelt. Auch diese Spreuverteiler werden üblicherweise hydraulisch angetrieben (DE 35 44 157 C1).

Üblicherweise wird dem hydraulischen Haspelantriebsmotor eine eigene Pumpe zum Antrieb zugeordnet (DE 100 12 056 A1). Es wurde auch vorgeschlagen, den Haspelantriebsmotor mit einem hydraulischen Motor in Reihe zu schalten, der einen rotierenden Halmteiler antreibt (DE 102 06 541 A1), oder mit Hydromotoren zum Antrieb von Fördergurten des Schneidwerks (EP 1 055 359 A1). Analog ist den Hydromotoren zum Antrieb des Spreuverteilers eine eigene Hydropumpe zugeordnet (US 5 797 793 A).

### Aufgabe

Die der Erfindung zu Grunde liegende Aufgabe wird darin gesehen, eine gegenüber dem Stand der Technik vereinfachte Antriebsanordnung für eine Haspel und einen Spreuverteiler eines Mähdreschers zu schaffen.

### Lösung

Diese Aufgabe wird erfindungsgemäß durch die Lehre des Anspruchs 1 gelöst, wobei in den weiteren Ansprüchen Merkmale aufgeführt sind, die die Lösung in vorteilhafter Weise weiterentwickeln.

Eine Antriebsanordnung für eine Haspel und einen Spreuverteiler eines Mähdreschers umfasst einen ersten Hydromotor zum Antrieb der Haspel und einen bezüglich des Flusses des Hydraulikfluids damit in Reihe geschalteten zweiten Hydromotor zum Antrieb des Spreuverteilers. Die Hydromotoren weisen ein festes Schluckvolumen auf und werden durch eine Pumpe mit festem Fördervolumen angetrieben. Zur Drehzahlverstellung ist in den Zuleitungen der Hydromotoren jeweils ein Proportionalventil angeordnet.

Auf diese Weise reicht eine einzige Pumpe aus, beide Hydromotore gleichzeitig anzutreiben. Welcher der Hydromotore stromauf und welcher stromab liegt, ist im Rahmen des erfindungsgemäßen Gedankens beliebig.

Bei einer bevorzugten Ausführungsform sind zwei Spreuverteiler vorhanden, denen jeweils ein zweiter Hydromotor zugeordnet ist. Die zweiten Hydromotoren werden zweckmäßigerweise in Reihe geschaltet, obwohl auch eine Parallelschaltung möglich wäre.

Um bei nicht verstellbaren Hydromotoren und einer Pumpe mit festem Fördervolumen eine unabhängige Verstellung der Drehzahlen durch die Proportionalventile zu ermöglichen, ohne jeweils die Drehzahl des anderen Hydromotors zu verändern, wird vorgeschlagen, die stromauf liegenden Anschlüsse der Proportionalventile und die stromab liegenden Anschlüsse der Hydromotore jeweils durch Kontrollventile zu überbrücken. Die Kontrollventile erhalten einen definierten Druck und/oder Fluss in der Verbindungsleitung zwischen dem ersten und zweiten Hydromotor aufrecht und können durch den Druck am stromab liegenden Anschluss der zugehörigen Proportionalventile angesteuert werden.

In den Zeichnungen ist ein nachfolgend näher beschriebenes Ausführungsbeispiel der Erfindung dargestellt. Es zeigt:
- Figur 1: eine schematische seitliche Ansicht eines Mähdreschers mit einem Erntevorsatz mit einer Haspel sowie einem Spreuverteiler, und
- Figur 2: ein Hydraulikschema der Antriebsanordnung der Haspel und des Spreuverteilers.

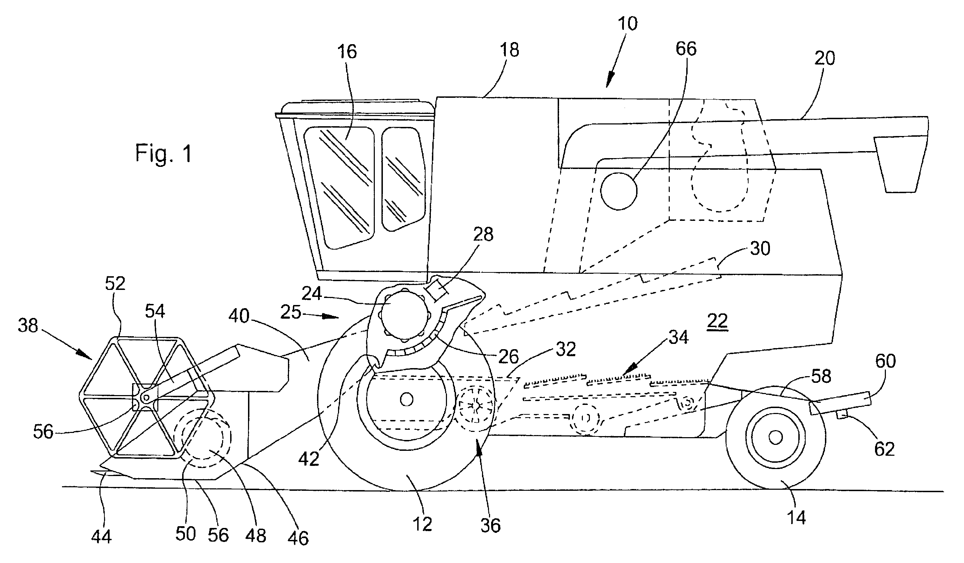

Ein in der Figur 1 gezeigter Mähdrescher 10 ist auf vorderen angetriebenen und rückwärtigen lenkbaren Rädern 12 bzw. 14 getragen und weist eine Fahrerkabine 16 auf, von der aus er von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Strohschüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Strohschüttler 30 auf den Boden abgelegt werden und leichte Bestandteile von den Sieben 34 über einen Förderboden 58 oder durch den Luftfluss des Gebläses 36 zwei seitlich nebeneinander angeordneten Spreuverteilern 60 zugeführt, die sie ebenfalls auf dem Boden verteilen. Die Spreuverteiler 60 werden durch Hydromotore 62 angetrieben. Auf dem Boden liegendes oder stehendes Gut wird über einen Einzugskanal 40 in Form eines Schrägförderers und eine Steinfangmulde 42 der Dreschtrommel 24 zugeführt, nachdem es von einem Erntevorsatz 38 vom Boden aufgenommen worden ist.

Der Erntevorsatz 38 ist in der dargestellten Ausführungsform ein Schneidwerk, an dessen Vorderseite sich ein sich hin- und herbewegender Messerbalken 44 befindet. Ein Rahmen 46 der Erntegutbergungseinrichtung 38 trägt außerdem einen Schneckenförderer 48 mit um ein mittiges Rohr umlaufenden Windungen 50. Oberhalb und vor dem Schneckenförderer 48 befindet sich eine Haspel 52, die dazu dient, stehendes Gut dem Messerbalken 44 und dem Schneckenförderer 48 zuzuführen. Die Haspel 52 ist an ihren beiden Enden durch Haspelträgerarme 54 mit dem Rahmen 46 verbunden und wird durch einen Hydromotor 56 um ihre Längsachse angetrieben, so dass sie sich in Figur 1 im Gegenuhrzeigersinn dreht.

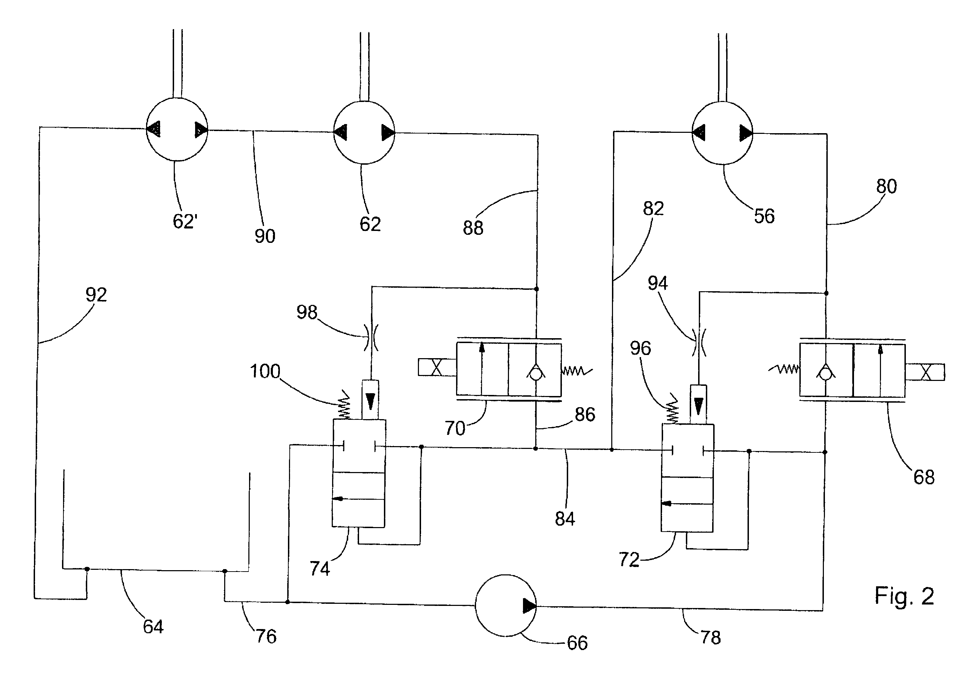

Die Figur 2 zeigt ein Hydraulikschema der Antriebsanordnung der Haspel 52 und des Spreuverteilers 60. Die Antriebsanordnung umfasst neben dem Hydromotor 56 zum Antrieb der Haspel 52 und zwei in Reihe geschalteten, in ihrem Schluckvolumen nicht verstellbaren Hydromotoren 62, 62', die jeweils einen der Spreuverteiler 60 antreiben, einen Vorratsbehälter 64 für Hydraulikfluid, eine Pumpe 66 mit festem Fördervolumen, zwei Proportionalventile 68, 70, zwei Kontrollventile 72, 74 und zugehörige Leitungen 76, 78, 80, 82, 84, 86, 88, 90 und 92.

Die Pumpe 66 ist eingangsseitig durch eine Leitung 76 mit dem Vorratsbehälter 64 verbunden und ausgangsseitig durch eine Leitung 78 mit dem Eingang eines ersten Proportionalventils 68. Das erste Proportionalventil 68 ist ausgangsseitig durch eine Leitung 80 mit dem Einlass des Hydromotors 56 zum Antrieb der Haspel 52 verbunden. Es ist elektromagnetisch durch einen Bediener in der Kabine 16 oder durch eine geeignete Steuerung kontrollierbar, um die Geschwindigkeit der Haspel 52 manuell oder automatisch an die jeweiligen Erntebedingungen und die Vortriebsgeschwindigkeit des Mähdreschers 10 anpassen zu können.

Der Auslass des Hydromotors 56 ist durch Leitungen 82, 84, 86 mit dem Eingang eines zweiten Proportionalventils 70 verbunden. Das zweite Proportionalventil 70 ist ausgangsseitig durch eine Leitung 88 mit dem Einlass eines ersten Hydromotors 62 zum Antrieb eines Spreuverteilers 60 verbunden, dessen Auslass durch eine Leitung 90 mit dem Einlass eines zweiten Hydromotors 62' zum Antrieb eines zweiten Spreuverteilers 60 verbunden ist. Der Auslass des zweiten Hydromotors 62' ist über eine Leitung 92 mit dem Vorratsbehälter 64 verbunden. Das zweite Proportionalventil 70 ist elektromagnetisch durch einen Bediener in der Kabine 16 oder durch eine geeignete Steuerung kontrollierbar, um die Geschwindigkeit der Spreuverteiler 60 manuell oder automatisch an die jeweiligen Erntebedingungen und die Schneidwerksbreite des Erntevorsatzes 38 anpassen zu können.

Die Hydromotore 56 und 60, 62' sind somit hydraulisch in Reihe geschaltet. Sie werden durch eine einzige Pumpe 66 angetrieben, was den Aufwand für die Antriebsanordnung gegenüber getrennten Antriebssystemen für die Hydromotore 56 einerseits und 60, 62' andererseits vermindert. Es wäre auch möglich, die Pumpe 66 mit dem Einlass des Hydromotors 62 zu verbinden und dessen Auslass mit dem Hydromotor 56.

Um zu verhindern, dass sich die Geschwindigkeit der Hydromotore 62, 62' ändert, wenn das Proportionalventil 68 verstellt wird, und analog dass sich die Geschwindigkeit des Hydromotors 56 ändert, wenn das Proportionalventil 70 verstellt wird, sind die Kontrollventile 72, 74 vorgesehen.

Das Kontrollventil 72 ist zwischen den Leitungen 78 und 84 angeordnet und wird einerseits durch den Druck in der Leitung 78 und andererseits durch den Druck in der Leitung 80 gesteuert, durch den sein oben eingezeichneter Steueranschluss durch eine Drossel 94 verbunden ist. Wenn bei geöffnetem Proportionalventil 68 der hydraulische Fluss durch die Leitung 80 und somit durch den Hydromotor 56 groß ist, liegt am oben eingezeichneten Steueranschluss etwa derselbe Druck wie am unten eingezeichneten Steueranschluss an, so dass die Feder 96 das Steuerventil in die Schließposition verbringt. Ist andererseits das Proportionalventil 68 geschlossen, öffnet der Druck an der Leitung 78 das Steuerventil 72, so dass auch in diesem Fall in der Leitung 84 ein hinreichender Druck und Fluss bereitsteht, um die Hydromotore 62, 62' anzutreiben.

Das Kontrollventil 74 ist zwischen den Leitungen 84 und 76 angeordnet (es könnte anstelle einer Verbindung mit der Leitung 76 auch durch eine separate Leitung mit dem Vorratsbehälter 64 verbunden werden) und wird einerseits durch den Druck in der Leitung 84 und andererseits durch den Druck in der Leitung 88 gesteuert, durch den sein oben eingezeichneter Steueranschluss durch eine Drossel 98 verbunden ist. Wenn bei geöffnetem Proportionalventil 70 der hydraulische Fluss durch die Leitung 88 und somit durch die Hydromotore 62, 62' groß ist, liegt am oben eingezeichneten Steueranschluss etwa derselbe Druck wie am unten eingezeichneten Steueranschluss an, so dass die Feder 100 das Steuerventil in die Schließposition verbringt. Ist andererseits das Proportionalventil 70 geschlossen, öffnet der Druck an der Leitung 84 das Steuerventil 74, so dass auch in diesem Fall in der Leitung 84 ein hinreichender Fluss möglich ist, um das Hydraulikfluid des Hydromotors 56 in den Vorratsbehälter 64 abzuleiten.

Es sei noch angemerkt, dass noch Druckbegrenzungsventile (nicht gezeigt) zwischen den Leitungen 78 und 76, zwischen den Leitungen 80 und 82 und zwischen den Leitungen 88 und 92 eingefügt werden können. Außerdem kann der Druck der Pumpe 66 zusätzlich zum Antrieb eines Reversiermotors (nicht gezeigt) für den Schrägförderer 40 verwendet werden.

## Patentansprüche

1. Antriebsanordnung für eine Haspel (52) und einen Spreuverteiler (60) eines Mähdreschers (10), mit einem ersten Hydromotor (56) zum Antrieb der Haspel (52) und einem zweiten Hydromotor (62, 62') zum Antrieb des Spreuverteilers (60), wobei die Hydromotoren (56, 62, 62') bezüglich des Flusses des Hydraulikfluids in Reihe geschaltet sind, dass die Hydromotoren (56, 62, 62') ein festes Schluckvolumen haben und durch eine Pumpe (66) mit festem Fördervolumen angetrieben werden, und dass in den Zuleitungen (80, 88) der Hydromotoren (56, 62, 62') jeweils ein Proportionalventil (68, 70) angeordnet ist, um die Geschwindigkeit der Hydromotoren (56, 62, 62') zu variieren.

2. Antriebsanordnung nach Anspruch 1, **dadurch gekennzeichnet, dass** zwei Spreuverteiler (60) vorhanden sind, denen jeweils ein zweiter Hydromotor (62, 62') zugeordnet ist, und dass die zweiten Hydromotoren (62, 62') in Reihe geschaltet sind.

3. Antriebsanordnung nach Anspruch 1 oder 2, **dadurch gekennzeichnet, dass** die stromauf liegenden Anschlüsse der Proportionalventile (68, 70) und die stromab liegenden Anschlüsse der Hydromotore (56, 62, 62') jeweils durch Kontrollventile (72, 74) überbrückt sind, die einen definierten Druck und/oder Fluss in der Verbindungsleitung (84) zwischen dem ersten Hydromotor (56) und zweiten Hydromotor (62, 62') aufrechterhalten.

4. Antriebsanordnung nach Anspruch 3, **dadurch gekennzeichnet, dass** die Kontrollventile (72, 74) durch den Druck am stromab liegenden Anschluss der zugehörigen Proportionalventile (68, 70) angesteuert werden.

5. Mähdrescher (10) mit einem Emtevorsatz (38), der eine Haspel (52) umfasst, wenigstens einem Spreuverteiler (60) und einer Antriebsanordnung nach einem der vorhergehenden Ansprüche.

## Claims

1. Drive arrangement for a reel (52) and a chaff spreader (60) of a combine (10), having a first hydraulic motor (56) for driving the reel (52) and a second hydraulic motor (62, 62') for driving the chaff spreader (60), wherein the hydraulic motors (56, 62, 62') are connected in series with regard to the flow of hydraulic fluid, in that the hydraulic motors (56, 62, 62') have a fixed displacement volume and are driven by a pump (66) having a fixed delivery volume, and in that in each case one proportional valve (68, 70) is arranged in the supply lines (80, 88) to the hydraulic motors (56, 62, 62') in order to vary the speed of the hydraulic motors (56, 62, 62').

2. Drive arrangement according to Claim 1, **characterized in that** two chaff spreaders (60) are present, to which is assigned in each case one second hydraulic motor (62, 62'), and **in that** the second hydraulic motors (62, 62') are connected in series.

3. Drive arrangement according to Claim 1 or 2, **characterized in that** the upstream connections of the proportional valves (68, 70) and the downstream connections of the hydraulic motors (56, 62, 62') are in each case bridged by control valves (72, 74) which maintain a defined pressure and/or flow in the connecting line (84) between the first hydraulic motor (56) and second hydraulic motor (62, 62').

4. Drive arrangement according to Claim 3, **characterized in that** the control valves (72, 74) are actuated by the pressure at the downstream connections of the associated proportional valves (68, 70).

5. Combine (10) having a header (38) comprising a reel (52), at least one chaff spreader (60) and a drive arrangement according to one of the preceding claims.

## Revendications

1. Agencement d'entraînement pour un rabatteur (52) et un dispositif épandeur de vannure (60) d'une moissonneuse-batteuse (10), comprenant un premier moteur hydraulique (56) pour l'entraînement du rabatteur (52) et un deuxième moteur hydraulique (62, 62') pour l'entraînement du dispositif épandeur de vannure (60), les moteurs hydrauliques (56, 62, 62') étant montés en série par rapport au flux du fluide hydraulique, les moteurs hydrauliques (56, 62, 62') ayant une cylindrée fixe et étant entraînés par une pompe (66) avec un volume de refoulement fixe, et une soupape proportionnelle (68, 70) étant à chaque fois disposée dans les conduites d'alimentation (80, 88) des moteurs hydrauliques (56, 62, 62'), afin de faire varier la vitesse des moteurs hydrauliques (56, 62, 62').

2. Agencement d'entraînement selon la revendication 1, **caractérisé en ce que** deux dispositifs épandeurs de vannure (60) sont prévus, lesquels sont chacun associés à un deuxième moteur hydraulique (62, 62'), et **en ce que** les deuxièmes moteurs hydrauliques (62, 62') sont montés en série.

3. Agencement d'entraînement selon la revendication 1 ou 2, **caractérisé en ce que** les raccords des soupapes proportionnelles (68, 70) situés en amont et les raccords des moteurs hydrauliques (56, 62, 62') situés en aval sont surmontés à chaque fois par des soupapes de commande (72, 74), qui maintiennent une pression définie et/ou un flux défini dans la conduite de liaison (84) entre le premier moteur hydraulique (56) et le deuxième moteur hydraulique (62, 62').

4. Agencement d'entraînement selon la revendication 3, **caractérisé en ce que** les soupapes de commande (72, 74) sont commandées par la pression au niveau du raccord des soupapes proportionnelles associées (68, 70) situé en aval.

5. Moissonneuse-batteuse (10) comprenant une tête de récolte (38), qui comprend un rabatteur (52), au moins un dispositif épandeur de vannure (60) et un agencement d'entraînement selon l'une quelconque des revendications précédentes.
